# EUROPEAN PATENT APPLICATION

(11) **EP 1 770 478 A1**
(43) Date of publication of application: **04.04.2007**
(21) Application number: 05734628.0
(22) Date of filing: 19.04.2005
(51) Int. Cl.: G06F 3/00, G06F 12/00, G06F 17/30

(54) **DISPLAY CONTROL DEVICE, DISPLAY CONTROL METHOD, AND DISPLAY CONTROL PROGRAM**

(30) Priority: 22.06.2004 JP 2004183775
(71) Applicant: MATSUSHITA ELECTRIC INDUSTRIAL CO., LTD., Osaka 571-8501 (JP)
(72) Inventor: MATSUI, Takayuki c/o Matsushita El. Ind. Co. Ltd., Chuo-ku, Osaka-shi, Osaka 540-6319 (JP); OHTA, Atsushi c/o Matsushita El. Ind. Co. Ltd., Chuo-ku, Osaka-shi, Osaka 540-6319 (JP); TSUGEI, Naoyuki c/o Matsushita El. Ind. Co. Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/007448
(87) International publication number: WO 2005/124520

(57) **Abstract**

An object of the invention is to display different types of information without limiting the amount of information that can be displayed.

A mobile telephone 1 includes an input section 2, a display controller 3, an LCD 4, and a data storage section 8. The display controller 3 has an input acceptance section 5 for distributing processing in response to input from the input section 2, a focus position control section 6 having a function of moving the focus position in accordance with input from the input section 2 and a function of detecting the focus position in a displayable area, a data acquisition section 7 for acquiring a file name list in accordance with a processing request of the input acceptance section 5 and reading thumbnail information stored under the specified file name, an image processing section 9 for developing the acquired thumbnail information to provide a thumbnail image, and a display processing section 10 for displaying the acquired thumbnail image in the displayable area other than the focus position detected by the focus position control section 6.

## Description

### TECHNICAL FIELD

This invention relates to a display controller, a display control method, and a display control program for displaying information in a displayable area.

### BACKGROUND ART

Hitherto, to list file names, titles, etc., in a personal computer having a large screen, thumbnail images have been displayed in an area different from the file name list for the user to see the image stored in each file. In a mobile telephone having a small screen, a file name list and thumbnail images are displayed on separate screens, but a mobile telephone for displaying a thumbnail image at the same time with a file name display area limited is also available (for example, refer to non-patent document 1).

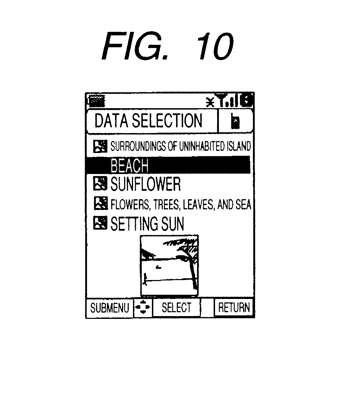

In the mobile telephone in non-patent document 1, a file name display area is provided in an upper portion of a display screen and an image display area is provided in a lower portion as shown in FIG. 10. Thus, if the user focuses on the file name in the upper portion, the image stored in the file can be displayed in the lower portion.

Non-patent document 1: Toriatsukai Setsumeisho FOMAP900i Application hen P329

### DISCLOSURE OF THE INVENTION

### PROBLEMS TO BE SOLVED BY THE INVENTION

However, in the mobile telephone in non-patent document 1, the area of apart of the screen is allocated for the thumbnail image display purpose only and a file name cannot be displayed in the thumbnail image dedicated area and therefore the number of file names that can be displayed at a time on the screen lessens and the amount of information that can be displayed is limited.

It is therefore an object of the invention to provide a display controller, a display control method, and a display control program capable of displaying different types of information without limiting the amount of information that can be displayed.

### MEANS FOR SOLVING THE PROBLEMS

The display controller of the invention is a display controller for focusing on and displaying first information specified from among at least one piece of first information displayed in a displayable area, the display controller comprising focus position detection means for detecting a focus position, read means for reading second information relevant to the specified first information, and display processing means for displaying the acquired second information in the displayable area other than the detected focus position. According to the configuration described above, the display controller includes the display processing means for displaying the acquired second information in the displayable area other than the detected focus position, whereby the second information can be displayed without hindering display of the specified first information, so that different types of information can be displayed without limiting the amount of information that can be displayed.

The display controller of the invention includes read control means for controlling the start timing of reading the second information. According to the configuration described above, the start timing of reading the second information is controlled, whereby the need for performed read processing each time the focus position moves is eliminated and the processing load is lightened.

In the display controller of the invention, if the detected focus position is contained in one of the areas into which the displayable area is divided, the display processing means displays the acquired second information in a different area of the displayable area. According to the configuration described above, if the detected focus position is contained in one of the areas into which the displayable area is divided, the display processing means displays the acquired second information in a different area of the displayable area, whereby the specified first information and the second information can be displayed in different areas, so that the specified first information and the second information relevant to the first information can be displayed collectively in the displayable area.

In the display controller of the invention, the display processing means displays the second information in the area determined based on the detected focus position and the area occupied by the second information to be displayed. According to the configuration described above, the display processing means displays the second information in the area determined based on the detected focus position and the area of the second information to be displayed, whereby the specified first information and the second information can be displayed in different areas, so that the second information can be displayed in response to the area occupied by the second information.

In the display controller of the invention, the first information is a title name. According to the configuration described above, the specified title name can be displayed.

In the display controller of the invention, the second information is image information, and the display controller includes image processing means for developing the image information. According to the configuration described above, the developed image can be displayed.

In the display controller of the invention, the first information is the name of a file storing the image information.
According to the configuration described above, the specified file name can be displayed.

In the display controller of the invention, the image information is thumbnail information. According to the configuration described above, the specified file name and the thumbnail can be displayed collectively in the displayable area.

The display controller of the invention includes focus position control means for moving the focus position. According to the configuration described above, the focus position can be moved.

The display controller of the invention includes limitation means for interrupting the development processing, if the focus position detection means moves the focus position while the image processing means performs development processing of the image information. According to the configuration described above, if the focus position detection means moves the focus position while the image processing means performs development processing of the image information, the development processing is interrupted, whereby the focus position can be moved at high speed.

In the display controller of the invention, limitation means for interrupting the read processing, if the focus position detection means moves the focus position while the second information read means performs the second information read processing. According to the configuration described above, if the focus position detection means moves the focus position while the second information read means performs the second information read processing, the read processing is interrupted, whereby the focus position can be moved at high speed.

The display control method of the invention is a display control method for focusing on and displaying first information specified from among at least one piece of first information displayed in a displayable area, the display control method including the steps of detecting a focus position, reading second information relevant to the specified first information, and displaying the acquired second information in the displayable area other than the detected focus position.

Further, the display control program of the invention is a display control program for focusing on and displaying first information specified from among at least one piece of first information displayed in a displayable area, the display control program for causing a computer to function as focus position detection means for detecting a focus position, read means for reading second information relevant to the specified first information, and display processing means for displaying the acquired second information in the displayable area other than the detected focus position.

### ADVANTAGES OF THE INVENTION

According to the invention, the acquired second information is displayed in the displayable area other than the detected focus position, whereby the second information can be displayed without hindering display of the specified first information, so that different types of information can be displayed without limiting the amount of information that can be displayed.

### BRIEF DESCRIPTION OF THE DRAWINGS

[FIG. 1] A functional block diagram of a mobile telephone to describe one embodiment of the invention.
[FIG. 2] A flowchart to show the processing procedure of the mobile telephone in the embodiment.
[FIG. 3] A drawing to show a display example of folders
stored in a data folder in the embodiment.
[FIG. 4] A drawing to show a data configuration example in the data folder in the embodiment.
[FIG. 5] A drawing to show a display example of a file name list and a thumbnail image in the embodiment.
[FIG. 6] A flowchart to show a first processing procedure for determining the display area of a thumbnail image in the embodiment of the invention.
[FIG. 7] A drawing to describe the first processing of determining the display area of the thumbnail image in the embodiment of the invention.
[FIG. 8] A flowchart to show a second processing procedure for determining the display area of a thumbnail image in the embodiment of the invention.
[FIG. 9] A drawing to describe the second processing of determining the display area of the thumbnail image in the embodiment of the invention.
[FIG. 10] A drawing to show a display screen example of a mobile telephone in a related art.

### DESCRIPTION OF REFERENCE NUMERALS

- 1: Mobile telephone
- 2: Input section
- 3: Display controller
- 4: LCD
- 5: Input acceptance section
- 6: Focus position control section
- 7: Data acquisition section
- 8: Data storage section
- 9: Image processing section
- 10: Display processing section
- 31: File name list
- 32: File name
- 33: Thumbnail image
- 41: Displayable area
- A: Focus position
- B, C, D: Area

### BEST MODE FOR CARRYING OUT THE INVENTION

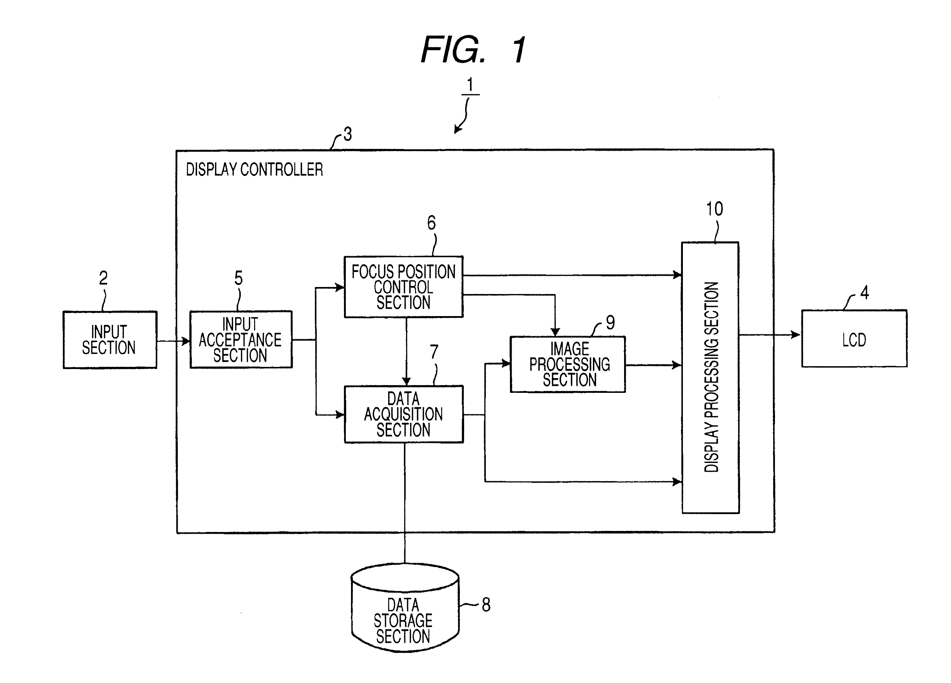

FIG. 1 is a functional block diagram of a mobile telephone to describe one embodiment of the invention. In FIG. 1, a mobile telephone 1 includes an input section 2, a display controller 3, an LCD (Liquid Crystal Display) 4, and a data storage section 8. The input section 2 is used for input and contains a menu button, a ten-key pad, a determination button, an up, down, left, right button, etc. The display controller 3 focuses and displays the specified file name out of a list of the names of files storing thumbnail images (at least one file name) displayed in a displayable area in accordance with input from the input section 2. The LCD 4 displays information in the displayable area under the control of the display controller 3. The data storage section 8 stores file name list data and thumbnail information in each file. The user of the mobile telephone 1 specifies the file name out of the file name list by input to the input section 2.

The display controller 3 has an input acceptance section 5, a focus position control section 6, a data acquisition section 7, an image processing section 9, and a display processing section 10. The input acceptance section 5 accepts input from the input section 2 and distributes processing in response to the accepted input. The focus position control section 6 has a function of moving the focus position in accordance with input from the input section 2 and a function of detecting the focus position in the displayable area. The data acquisition section 7 acquires a file name list in accordance with a processing request of the input acceptance section 5 and reads thumbnail information stored under the specified file name. The image processing section 9 develops the acquired thumbnail information to provide a thumbnail image. The display processing section 10 displays a list screen with a thumbnail image where the acquired thumbnail image is placed in the displayable area other than the focus position detected by the focus position control section 6. The processing of the display controller 3 is implemented by a computer program or hardware (control chip, etc.,) incorporating the processing thereof.

The data storage section 8 is flash memory or an external memory device such as a memory card incorporating flash memory, and stores a folder, file name list data stored in the folder, thumbnail information stored in each file, etc. The thumbnail information is provided by converting principal image data such as a photo taken with a camera into an EXIF format, etc., for retention; the thumbnail information can be developed to a thumbnail image. The thumbnail information has a size almost equal to the size of a thumbnail image displayed on a screen of a usual mobile telephone. Principal image data to play back a principal image may be retained together. The thumbnail information may be provided by converting one frame of moving image data into a still image for retention.

The data acquisition section 7 reads thumbnail information relevant to the specified file name and has a function of controlling the start timing of reading the thumb information and a function of canceling read processing if the user presses the up, down, left, right button of the input section 2 during the read processing and the focus position control section 6 moves the focus position.

The display processing section 10 has a function of displaying the acquired file name in a different area of the displayable area if the focus position detected by the focus position control section 6 is contained in one of the areas into which the displayable area is divided and a function of displaying second information in the area determined based on the detected focus position and the display size of the read thumbnail image information. The display processing section 10 creates a file name listing screen with a thumbnail image after determining placement of a thumbnail image.

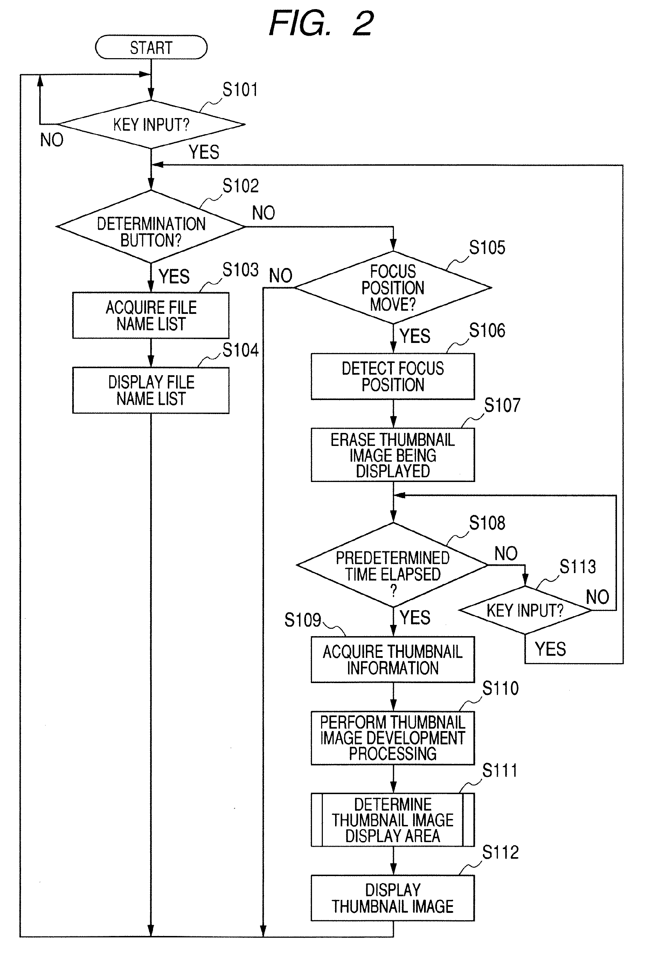

The operation of the described mobile telephone 1 will be discussed with FIGS. 2 to 9.

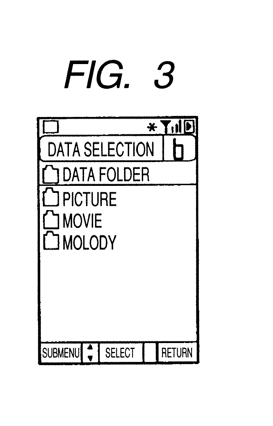

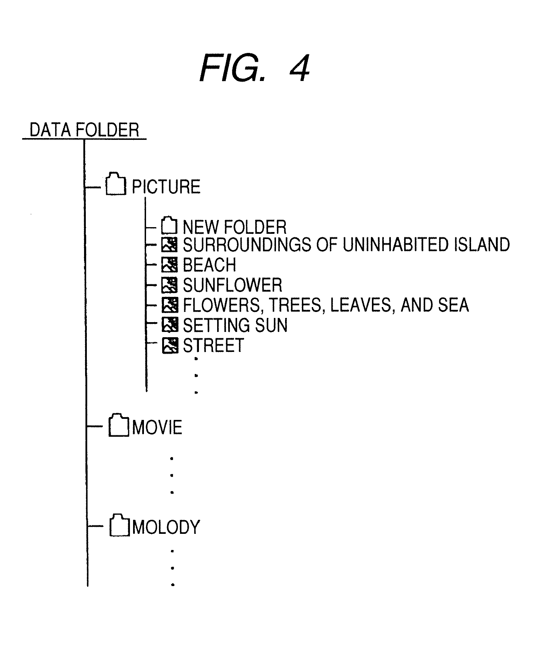

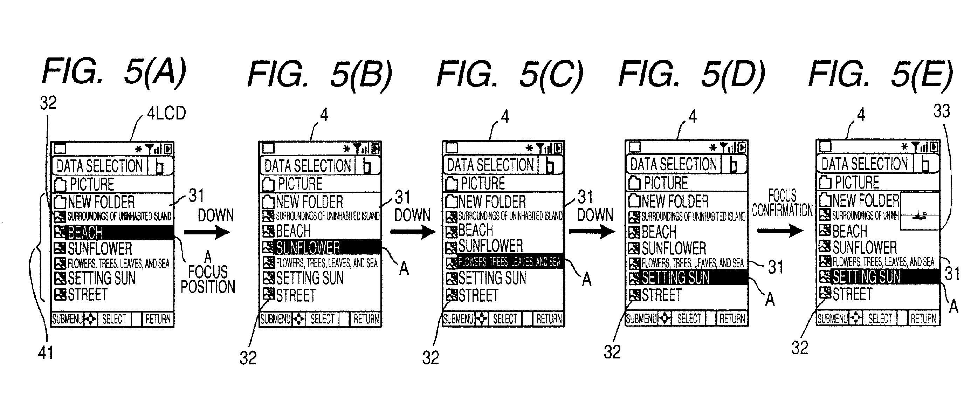

FIG. 2 is a flowchart to show the processing procedure of the mobile telephone in the embodiment; it shows the procedure of display processing of a file name list and the thumbnail image of the specified file collectively. First, as shown in FIG. 3, the user focuses on the folder storing files of image data such as a photo (picture folder) and presses the determination button of the input section 2 (YES at S101). The input acceptance section 5 accepts the input of the determination button and since the pressed button of the input section 2 is the determination button to display a file name list of files storing image data (YES at S102), the input acceptance section requests the data acquisition section 7 to acquire the file name list of the files stored in the folder, and acquires the file name list from the data storage section 8 (S103). Since the data structure in the data folder is a hierarchical structure as shown in FIG. 4, the display processing section 10 displays a file name list on the LCD 4 as shown in FIG. 5 (a) (described later) based on the acquired file name list (list of file names belonging to the subordinate of the picture folder) (S104). The process returns to S101, waiting for another key input (No at S101).

FIG. 5 is a drawing to show a display example of a file name list and a thumbnail image in the embodiment. FIG. 5 (a) is a drawing to show a display example of only a file name list, (b) to (d) are drawings to show a situation in which the focus position is moved on the LCD, and (e) is a drawing to show an example of collectively displaying the file name list and a thumbnail image.

As shown in FIG. 5 (a), each file name 32 stored in the specified, for example, "picture" folder is displayed in a file name list 31. As shown in FIG. 5 (a) to FIG. 5 (d), if the user moves a focus position A on the file name list 31 displayed in a displayable area 41 of the LCD 4 by the up, down, left, right button (YES at S101), the input acceptance section 5 accepts the input of the up, down, left, right button for moving the focus position A (NO at S102). When the input is a move of the focus position A on the file name list 31 of the files storing image data (YES at S105), the focus position control section 6 detects the focus position A (S106).

Next, if a thumbnail image 33 being displayed already exists, the display processing section 10 erases the thumbnail image (S107). The focus position control section 6 detects that the focus position A does not move for a predetermined time (YES at S108) with no key input (NO at S113) within the predetermined time (NO at S108), and confirms the input of the focus position A. When the input of the focus position A is confirmed, the data acquisition section 7 requests the data storage section 8 to acquire the thumbnail information of the file specified according to the focus position A, and reads the thumbnail information from the data storage section 8 (S109). The image processing section 9 develops the read thumbnail information to a thumbnail image (S110), and the display area of the thumbnail image is determined in the display processing section 10 (S111). The image processing section 9 superposes the thumbnail image 33 on the file name list 31 as in FIG. 5 (e) (S112).

If key input is executed (YES at S113) before the expiration of the predetermined time (NO at S108), the process returns to S102 and the input acceptance section 5 accepts the input for moving the focus position A (NO at S102). When the input is a move of the focus position A on the file name list 31 of the files storing image data (YES at S105), the focus position control section 6 detects the focus position A (S106). If the thumbnail image 33 being displayed exists, the display processing section 10 erases the thumbnail image (S107). If the focus position control section 6 again detects key input (YES at S113) before the expiration of the predetermined time (NO at S108), the process returns to S102 and S102 to S113 are repeated and the process waits for moving of the focus position A to stop at S108.

If key input is executed while the thumbnail information is being read at S109 or while the thumbnail information is being developed at S110, the thumbnail information read processing or the thumbnail information development processing is interrupted as a hardware interrupt, the process returns to S102, the key input is accepted, the focus is moved, and the focus position A is detected at S105.

The processing of determining the display area of the thumbnail image at S111 executed by the display processing section 10 involves the following two embodiments:

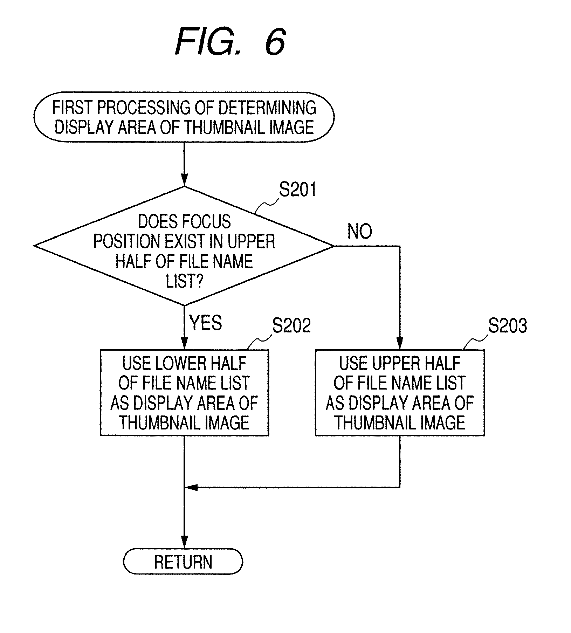

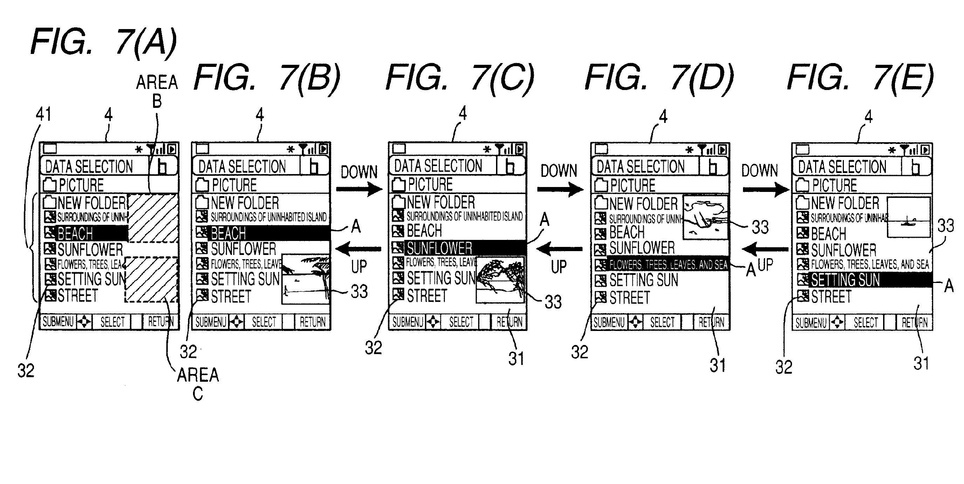

FIG. 6 is a flowchart to show a first processing procedure for determining the display area of the thumbnail image in the embodiment of the invention, and FIG. 7 is a drawing to describe the first processing of determining the display area of the thumbnail image in the embodiment of the invention. FIG. 7
(a) is a drawing to show the display areas of the thumbnail images on the file name list, and (b) to (e) are drawings to show the relationship between the focus position and the displayed thumbnail image.

In the first processing, if the detected focus position is contained in one of the areas into which the screen of the LCD 7 (displayable area) is divided, the display position of the thumbnail image is determined a different area of the displayable area. The display area of the thumbnail image is predetermined either an area B provided in the upper half of the displayable area 41 where the file name list 31 is displayed or an area C provided in the lower half, as shown in FIG. 7 (a). If the focus position A detected by the focus position control section 6 at S106 exists in a position in the upper half of the file name list 31 screen (YES at S201) as shown in FIG. 7 (b) or (c), the display processing section 10 sets the area C provided in the lower half of the file name list 31 screen as the display area of the thumbnail image (S202); if the focus position A exists in a position in the lower half of the file name list 31 screen (NO at S201) as shown in FIG. 7 (d) or (e), the display processing section 10 sets the area B provided in the upper half of the file name list 31 screen as the display area of the thumbnail image (S203). Then, the process returns to S112 in FIG. 2. The dividing manner of the displayable area is not limited to the manner in which the displayable area is divided into two upper and lower parts. The displayable area may be divided in any manner in a longitudinal direction or a lateral direction or the like.

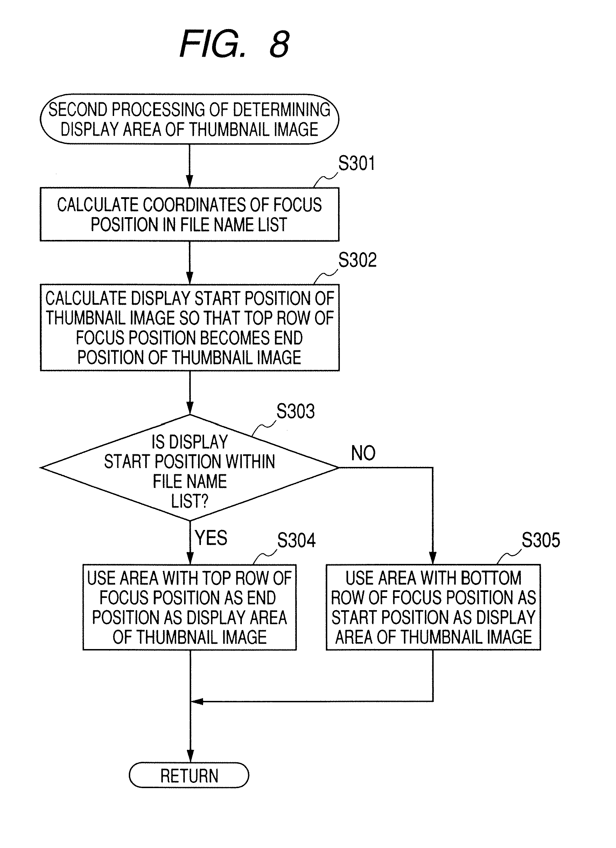

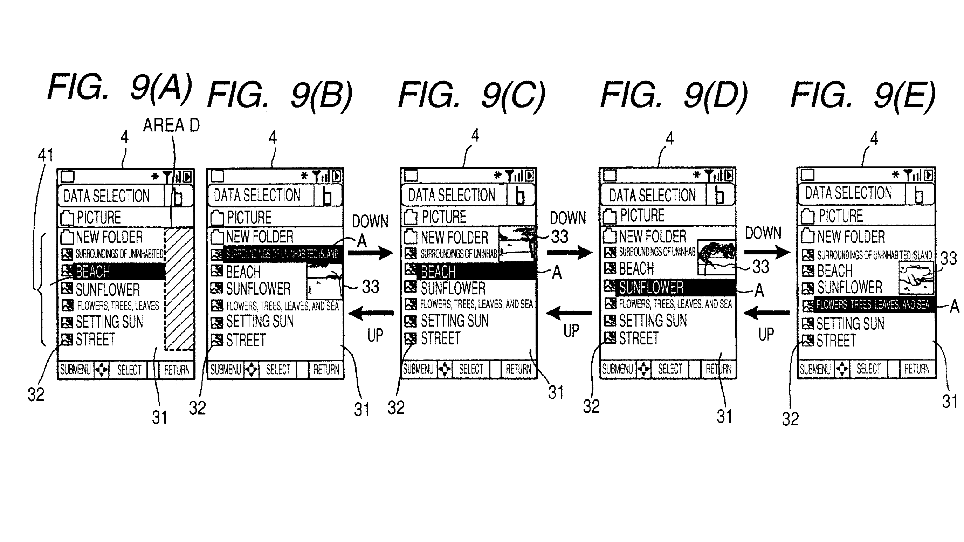

FIG. 8 is a flowchart to show a second processing procedure for determining the display area of the thumbnail image in the embodiment of the invention. FIG. 9 is a drawing to describe the second processing of determining the display area of the thumbnail image in the embodiment of the invention; FIG. 9 (a) is a drawing to show the display area of the thumbnail image on the file name list, and (b) to (e) are drawings to show the relationship between the focus position and the displayed thumbnail image.

In the second processing, the display position of the thumbnail image is determined based on the detected focus position and the display size of the read thumbnail image. The display area of the thumbnail image is set to any position in an area D provided to the right of the file name list 31 in the displayable area 41, as shown in FIG. 9 (a). The display processing section 10 calculates the coordinates in the file name list 31 screen from the focus position A detected by the focus position control section 6 at S106 (S301) and calculates the display start position of the thumbnail image from the size of the thumbnail image so that the top row of the focus position A becomes the end position of the thumbnail image (S302). If the calculated display start position of the thumbnail image fits in the area D of the file name list 31 (YES at S303), the area with the top row of the focus position A as the end position calculated at S302 is adopted as the display area of the thumbnail image (S304), as shown in FIG. 9 (c) to FIG. 9 (e) .

If the display start position of the thumbnail image does not fit in the area D of the file name list 31 at S303 (NO at S303), the area with the bottom row of the focus position A as the display start position of the thumbnail image is determined the display area of the thumbnail image (S305), as shown in FIG. 9 (b). Then, the process returns to S112 in FIG. 2.

According to the embodiment described above, the acquired thumbnail image is displayed in the displayable area other than the detected focus position, whereby file name display can be produced without hindering display of the specified file name, so that the specified file name and the thumbnail image stored in the file of the file name can be displayed collectively in the displayable area. Since the thumbnail image 33 is superposed on the file name list 31, a mobile telephone with a small display screen would be able to display the thumbnail image 33 in the specified file while displaying a large number of file names 32.

Since thumbnail information smaller than the principal image information is stored in the data storage section 8, the image information read time and the image development processing time are short and thus the thumbnail image is displayed rapidly. In the focus position control section 6, a predetermined time lag is provided until the focus position A stops and input based on the focus position A is confirmed, so that if the user operates keys successively, the focus can be moved at high speed following the key input. Since key input is accepted during the thumbnail information read or development processing, the focus can be moved during the read or development processing. Since a time lag is provided until the focus position is confirmed, the number of times a thumbnail image is read and is developed decreases. Thus, the power consumption can be reduced.

In the description given above, the display controller is installed in the mobile telephone by way of example, but the display controller may be installed in a machine such as a PDA (personal digital assistant), a navigation system, or a gaming machine.

While the invention has been described in detail with reference to the specific embodiments, it will be obvious to those skilled in the art that various changes and modifications can be made without departing from the spirit and the scope of the invention.
The present application is based on Japanese Patent Application (No. 2004-183775) filed on June 22, 2004, which is incorporated herein by reference.

### INDUSTRIAL APPLICABILITY

The invention has the advantage that different types of information can be displayed without limiting the amount of information that can be displayed since the acquired second information is displayed in the displayable area other than the detected focus position, whereby the second information can be displayed without hindering display of the specified first information; it is useful for a display controller, a display control method, a display control program, etc., for displaying information in a displayable area.

## Claims

1. A display controller for focusing on and displaying first information specified from at least one piece of first information displayed in a displayable area, the display controller comprising:
focus position detection means for detecting a focus position;
read means for reading second information relevant to the specified first information; and
display processing means for displaying the acquired second information in the displayable area other than the detected focus position.

2. The display controller according to claim 1, further comprising:
read control means for controlling a start timing of reading the second information.

3. The display controller according to claim 1 or 2,
wherein, if the detected focus position is contained in one of the areas into which the displayable area is divided, the display processing means displays the acquired second information in a different area of the displayable area.

4. The display controller according to claim 1 or 2,
wherein the display processing means displays the second information in the area determined based on the detected focus position and the area occupied by the second information to be displayed.

5. The display controller according to any one of claims 1 to 4,
wherein the first information is a title name.

6. The display controller according to any one of claims 1 to 5,
wherein the second information is image information, and
wherein the display controller further comprises:
image processing means for developing the image information.

7. The display controller according to claim 6,
wherein the first information is the name of a file storing the image information.

8. The display controller according to claim 6 or 7,
wherein the image information is thumbnail information.

9. The display controller according to any one of claims 6 to 8, further comprising:
focus position control means for moving the focus position.

10. The display controller according to claim 9, further comprising:
limitation means for interrupting the development processing, if the focus position detection means moves the focus position while the image processing means performs development processing of the image information.

11. The display controller according to claim 9, further comprising:
limitation means for interrupting the read processing, if the focus position detection means moves the focus position while the second information read means performs the second information read processing.

12. A display control method for focusing on and displaying first information specified from at least one piece of first information displayed in a displayable area, the display control method comprising:
detecting a focus position;
reading second information relevant to the specified first information; and
displaying the acquired second information in the displayable area other than the detected focus position.

13. A display control program for focusing on and displaying first information specified from at least one piece of first information displayed in a displayable area, the display control program for causing a computer to function as:
focus position detection means for detecting a focus position;
read means for reading second information relevant to the specified first information; and
display processing means for displaying the acquired second information in the displayable area other than the detected focus position.
